# EUROPEAN PATENT APPLICATION

(11) **EP 2 053 496 A2**
(43) Date of publication of application: **29.04.2009**
(21) Application number: 08253437.1
(22) Date of filing: 22.10.2008
(51) Int. Cl.: G06F 3/045

(54) **Touch panel and display device adopting the same**

(30) Priority: 23.10.2007 CN 200710202227; 27.12.2007 CN 200710305833; 12.12.2007 CN 200710125107; 14.12.2007 CN 200710125116; 14.12.2007 CN 200710125118; 12.12.2007 CN 200710125101; 12.12.2007 CN 200710125006; 12.12.2007 CN 200710125000; 21.12.2007 CN 200810125406; 19.09.2008 CN 200810216309; 04.07.2008 CN 200810068332; 22.08.2008 CN 200810142021; 22.08.2008 CN 200810142023; 12.12.2007 CN 200710125103
(71) Applicant: Tsinghua University, Haidian District, Beijing 100084 (CN)
(72) Inventor: Jiang, Kai-Li c/o Tsing Hua University, Haidan District Beijing City (CN); Liu, Chang-hong c/o Tsing Hua University, Haidan District Beijing City (CN); Liu, Liang c/o Tsing Hua University, Haidan District Beijing City (CN); Li, Qun-qing c/o Tsing Hua University, Haidan District Beijing City (CN); Fan, Shou-shen c/o Tsing Hua University, Haidan District Beijing City (CN)
(74) Representative: Craven, Ian

(57) **Abstract**

A touch panel includes a first electrode plate and a second electrode plate separated from the first electrode plate. The first electrode plate includes a first base and a first conductive layer located on a surface of the first base. The second electrode plate includes a second base and a second conductive layer located on a surface of the second base. The second conductive layer is opposite to the first conductive layer. At least one of the first conductive layer and the second conductive layer includes a carbon nanotube structure. A display device adopting the touch panel is also provided.

## Description

### 1. Field of the Invention

The present invention relates to a carbon nanotube based touch panel, and a display device adopting such touch panel.

### 2. Discussion of Related Art

Following the advancement in recent years of various electronic apparatuses, such as mobile phones, car navigation systems and the like, toward high performance and diversification, there has been continuous growth in the number of electronic apparatuses equipped with optically transparent touch panels at the front of their respective display devices (e.g., liquid crystal panels). A user of any such electronic apparatus operates it by pressing or touching the touch panel with a finger, a pen, a stylus, or a like tool while visually observing the display device through the touch panel. Therefore, a demand exists for touch panels that are superior in visibility and reliable in operation.

At present, different types of touch panels, including resistance, capacitance, infrared, and surface sound-wave types have been developed. Due to their high accuracy and low cost of production, resistance-type touch panels have been widely used.

A conventional resistance-type touch panel includes an upper base, a transparent upper conductive layer formed on a lower surface of the upper base, a lower base, a transparent lower conductive layer formed on an upper surface of the lower base, and a plurality of dot spacers formed between the transparent upper conductive layer and the transparent lower conductive layer. The transparent upper conductive layer and the transparent lower conductive layer are formed of electrically conductive indium tin oxide (ITO).

In operation, an upper surface of the upper base is pressed with a finger, a pen, or a like tool, and visual observation of a screen on the liquid crystal display device provided on a back side of the touch panel is provided. This causes the upper base to be deformed, and the upper conductive layer thus comes in contact with the lower conductive layer at the position where the pressing occurs. Voltages are separately applied by an electronic circuit to the transparent upper conductive layer and the transparent lower conductive layer. Thus, the deformed position can be detected by the electronic circuit.

Each of the transparent conductive layers (e.g., ITO layers) is generally formed by means of ion-beam sputtering, and this method is relatively complicated. Additionally, the ITO layer has poor wearability/durability, low chemical endurance, and uneven resistance over an entire area of the touch panel. Furthermore, the ITO layer has relatively low transparency. All the above-mentioned problems of the ITO layer make for a touch panel with low sensitivity, accuracy, and brightness.

What is needed, therefore, is to provide a durable touch panel with high sensitivity, accuracy, and brightness, and a display device adopting the same.

### SUMMARY OF THE INVENTION

In one embodiment, a touch panel includes a first electrode plate, and a second electrode plate separated from the first electrode plate. The first electrode plate includes a first base and a first conductive layer located on a surface of the first base. The second electrode plate includes a second base and a second conductive layer located on a surface of the second base. The second conductive layer is opposite to the first conductive layer. At least one of the first conductive layer and the second conductive layer includes a carbon nanotube structure.

Other novel features and advantages of the present touch panel and display device incorporating the same will become more apparent from the following detailed description of exemplary embodiments when taken in conjunction with the accompanying drawings.

### BRIEF DESCRIPTION OF THE DRAWINGS

Many aspects of the present touch panel and display device incorporating the same can be better understood with reference to the following drawings. The components in the drawings are not necessarily to scale, the emphasis instead being placed upon clearly illustrating the principles of the present touch panel and display device incorporating the same.

FIG. 1 is an exploded, isometric view of a touch panel in accordance with a present embodiment.

FIG. 2 is a transverse, cross-sectional view of the touch panel of FIG. 1 once assembled.

FIG. 3 shows a Scanning Electron Microscope (SEM) image of entangled carbon nanotubes in the carbon nanotube structure used in the touch panel of FIG. 1.

FIG. 4 shows a SEM image of another carbon nanotube structure that can be utilized in the touch panel of the exemplary embodiment, with the carbon nanotubes therein being arranged along a preferred orientation.

FIG. 5 shows a Scanning Electron Microscope (SEM) image of a carbon nanotube structure that can be utilized in the touch panel of the exemplary embodiment, with the carbon nanotubes therein being arranged along different directions.

FIG. 6 shows a Scanning Electron Microscope (SEM) image of a carbon nanotube film with carbon nanotubes therein joined end to end, used in the touch panel of FIG. 1.

FIG. 7 is a flow chart of a method for making the touch panel of FIG. 1, in accordance with a present embodiment.

FIG. 8 shows a photo of a heat-pressed carbon nanotube structure and a flexible base of the touch panel.

FIG. 9 shows a schematic view of the heat-pressed process used to form the heat-pressed carbon nanotube structure shown in FIG. 8.

FIG. 10 is essentially a schematic cross-sectional view of the touch panel of the present embodiment used with a display element of a display device, showing operation of the touch panel with a touch tool.

FIG. 11 shows a cross-sectional view of a touch control device using the display device of FIG. 10, in accordance with a present embodiment.

FIG. 12 shows a cross-sectional view of a portable computer using the display device of FIG. 10, in accordance with a present embodiment.

FIG. 13 shows a cross-sectional view of a desktop computer using the display device of FIG. 10, in accordance with a present embodiment.

FIG. 14 shows a cross-sectional view of a personal digital assistant using the display device of FIG. 10, in accordance with a present embodiment.

FIG. 15 shows a cross-sectional view of a mobile phone using the display device of FIG. 10, in accordance with a present embodiment.

Corresponding reference characters indicate corresponding parts throughout the several views. The exemplifications set out herein illustrate at least one exemplary embodiment of the present touch panel and display device incorporating the same, in at least one form, and such exemplifications are not to be construed as limiting the scope of the invention in any manner.

### DETAILED DESCRIPTION OF EXEMPLARY EMBODIMENTS

Reference will now be made to the drawings to describe, in detail, embodiments of the present touch panel and display device incorporating the same.

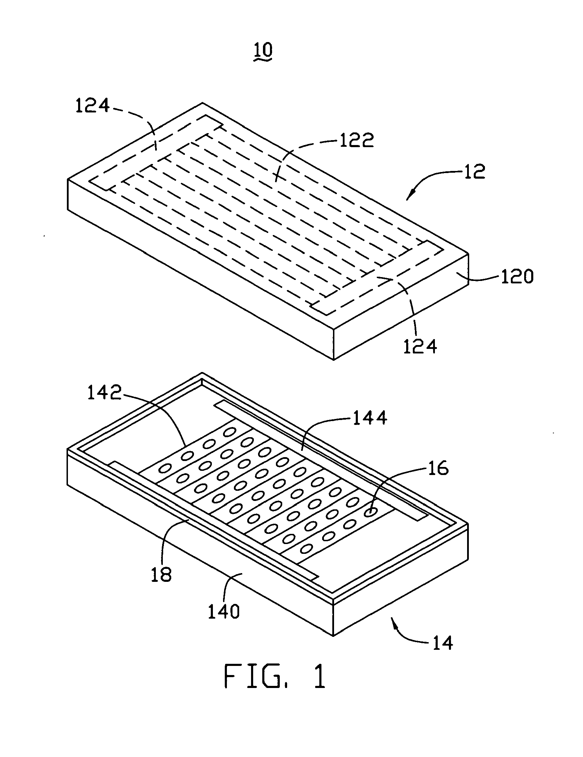

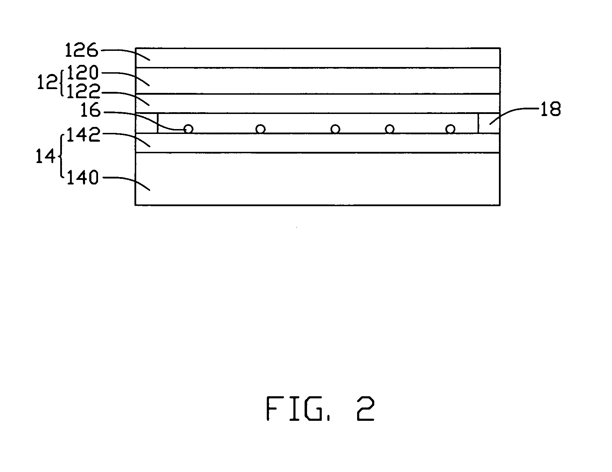

Referring to FIG. 1 and FIG. 2, a touch panel 10 includes a first electrode plate 12, a second electrode plate 14, and a plurality of dot spacers 16 located between the first electrode plate 12 and the second electrode plate 14.

The first electrode plate 12 includes a first base 120, a first conductive layer 122, and two first-electrodes 124. The first base 120 includes an upper surface and a lower surface, each of which is substantially flat. The two first-electrodes 124 and the first conductive layer 122 are located on the lower surface of the first base 120. The two first-electrodes 124 are located separately on opposite ends of the first conductive layer 122. A direction from one of the first-electrodes 124 across the first conductive layer 122 to the other first electrode 124 is defined as a first direction. The two first-electrodes 124 are electrically connected with the first conductive layer 122.

The second electrode plate 14 includes a second base 140, a second conductive layer 142, and two second-electrodes 144. The second base 140 includes an upper surface and a lower surface, each of which is substantially flat. The two second-electrodes 144 and the second conductive layer 142 are located on the upper surface of the second base 140. The two second-electrodes 144 are located separately on opposite ends of the second conductive layer 142. A direction from one of the second-electrodes 144 across the second conductive layer 142 to the other second-electrodes 144 is defined as a second direction. The two second-electrodes 144 are electrically connected with the second conductive layer 142.

The first direction is perpendicular to the second direction. That is, each of the two first-electrodes 124 is oriented along a second direction, and each of two second-electrodes 144 is oriented along a first direction. The first base 120 can be a transparent and flexible film or plate. The second base 140 also can be a transparent plate or film. A material of the second base 140 can be selected from rigid or flexible materials. When the second base 140 is made of a rigid material, and the material of the second base 140 can be selected from a group consisting of glass, quartz and diamond. The second base 140 can play a role of supporting. When the first base 120 and the second base 140 have a flexible planer structure and are made of flexible materials, a thickness of the first base 120 and the second base 140 approximately ranges from 0.01 millimeters to 1 centimeter. A material of the first base 120 and the second base 140 can be selected from a group consisting of polycarbonate (PC), polymethyl methacrylate (PMMA), polyethylene terephthalate, PES, cellulose acetate, benzocyclobutene, polyvinyl chloride (PVC) and any other acrylic resins, and any combination thereof. The first-electrodes 124 and the second-electrodes 144 are made of metal, alloy, conductive polymer, carbon nanotubes or any other suitable conductive material. In the present embodiment, the first base 120 and the second base 140 are both a polyester film, and the first-electrodes 124 and second-electrodes 144 are made of a conductive silver paste.

An insulative layer 18 is provided between the first and the second electrode plates 12 and 14. The first electrode plate 12 is located on the insulative layer 18. The first conductive layer 122 is opposite to, but is spaced from, the second conductive layer 142. The dot spacers 16 are separately located on the second conductive layer 142. A distance between the second electrode plate 14 and the first electrode plate 12 is in an approximate range from 2 to 20 microns. The insulative layer 18 and the dot spacers 16 are made of, for example, insulative resin or any other suitable insulative material. Insulation between the first electrode plate 12 and the second electrode plate 14 is provided by the insulative layer 18 and the dot spacers 16. It is to be understood that the dot spacers 16 are optional, particularly when the touch panel 10 is relatively small. They serve as supports given the size of the span and the strength of the first electrode plate 12.

A transparent protective film 126 is located on the upper surface of the first electrode plate 12. A material of the transparent protective film 126 can be selected from a group consisting of silicon nitrides, silicon dioxides, benzocyclobutenes, polyester films, and polyethylene terephthalates. The transparent protective film 126 can be made of slick plastic and receive a surface hardening treatment to protect the first electrode plate 12 from being scratched when in use.

At least one of the first conductive layer 122 and the second conductive layer 142 includes a carbon nanotube structure. The carbon nanotube structure 16 has substantially a uniform thickness and includes a plurality of carbon nanotubes uniformly distributed therein. The carbon nanotubes therein are orderly or disorderly distributed. Carbon nanotubes disorderly distributed in the carbon nanotube structure means an arranged direction of the carbon nanotubes is not along a fixed direction, and the number of the carbon nanotubes in different directions is almost the same. Carbon nanotubes orderly distributed in the carbon nanotube structure means an arranged direction of the carbon nanotubes has a regular rule, e.g., the carbon nanotubes are arranged approximately along a same direction or different directions.

The carbon nanotube structure includes at least one carbon nanotube film. The carbon nanotube film can be an ordered film or a disordered film. In the disordered film, the carbon nanotubes are disordered or isotropic. The disordered carbon nanotubes are entangled with each other or attracted by van der Waals attractive therebetween. The isotropic carbon nanotubes are substantially parallel to a surface of the carbon nanotube film. In the ordered film, the carbon nanotubes are primarily oriented along a same direction or along different directions in each film and substantially parallel to a surface of the carbon nanotube film. At least two carbon nanotube films can overlap with each other. An angle between the aligned directions of the carbon nanotubes in the two adjacent carbon nanotube films approximately ranges from above or equal to 0 ° to less than or equal to 90 °. The carbon nanotube structure also can include a plurality of coplanar carbon nanotube films. The plurality of coplanar carbon nanotube films can form a large area, and it is conducive to make a large area touch panel. Carbon nanotubes in the carbon nanotube structure can be selected from a group consisting of single-walled, double-walled, and multi-walled carbon nanotubes. Diameters of the single-walled carbon nanotubes approximately range from 0.5 nanometers to 50 nanometers. Diameters of the double-walled carbon nanotubes approximately range from 1 nanometer to 50 nanometers. Diameters of the multi-walled carbon nanotubes approximately range from 1.5 nanometers to 50 nanometers.The carbon nanotube film can be a flocculating carbon nanotube film, a pressing carbon nanotube film, or a drawing carbon naotube film.

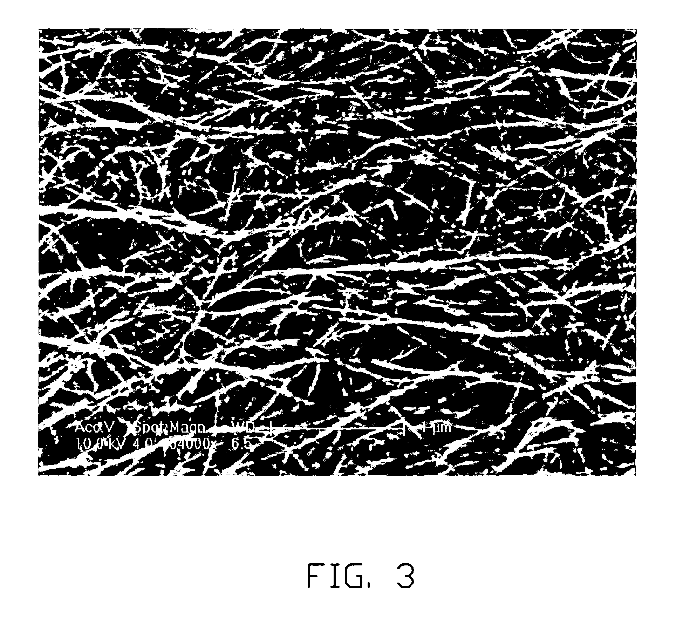

Referring to FIG. 3, the flocculating carbon nanotube film includes a plurality of carbon nanotubes that are isotropic, uniformly arranged, disordered, and are entangled with each other therein. The adjacent carbon nanotubes are combined and entangled by van der Waals attractive force therebetween, thereby forming an entangled structure/microporous structure. It is understood that the carbon nanotube structure is very microporous. Sizes of the micropores are less than 10 micrometers. Length and width of the carbon nanotube structure are not limited. A thickness of the carbon nanotube structure approximately ranges from 0.5 nanometers to 1 millimeter.

Due to the carbon nanotube structure including a plurality of isotropic carbon nanotubes and micropores, the carbon nanotube structure has excellent resistance distribution and light transparence. Thus the touch panel and the display device adopting the same have good accuracy and brightness.

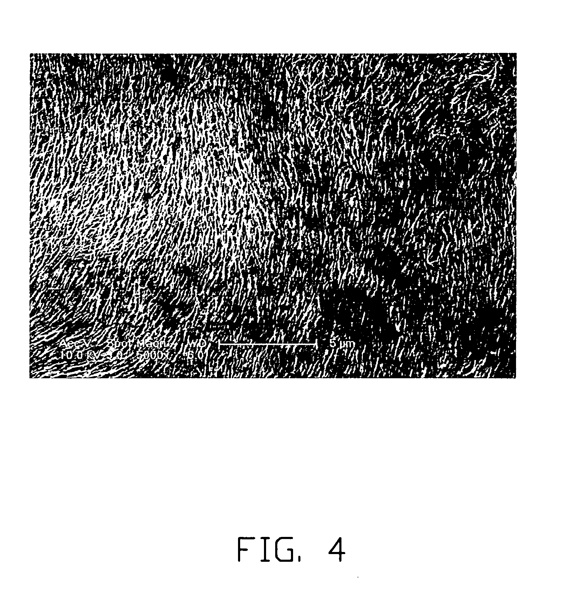

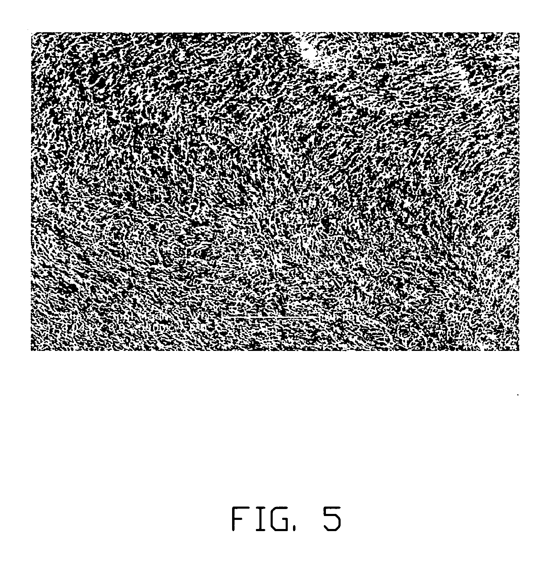

The pressing carbon nanotube film can be a free-standing carbon nanotube film. The carbon nanotubes in the carbon nanotube film are arranged isotropically, arranged along a same direction or arranged along different directions. An angle between a primary alignment direction of the carbon nanotubes and a surface of the pressing carbon nanotube film is 0 ° to approximately 15 °. The pressing carbon nanotube film can be formed by pressing a carbon nanotube array. The angle is closely related to pressure applied to the carbon nanotube array. The greater the pressure, the smaller the angle. The carbon nanotubes in the pressing carbon nanotube film can parallel to the surface of the pressing carbon nanotube film when the angle is 0 °. The adjacent carbon nanotubes are combined and attracted by van der Waals attractive force, thereby forming a free-standing structure. It is to be understood that the shape of the pressure head used to apply a pressure and the pressing direction can, opportunely, determine the direction of the carbon nanotubes arranged in each carbon nanotube film. Specifically, when a planar pressure head is used to press the array of carbon nanotubes along a direction perpendicular to the applicable base, a carbon nanotube film having a plurality of carbon nanotubes isotropically arranged can be obtained. Referring to FIG. 4, when a roller-shaped pressure head is used to travel across and press the array of carbon nanotubes along a predetermined single direction, a carbon nanotube film having a plurality of carbon nanotubes aligned along a general direction is obtained. When a roller-shaped pressure head is used to travel across and press the array of carbon nanotubes along different directions, a carbon nanotube film having a plurality of carbon nanotubes aligned along corresponding different directions is obtained, referring to FIG. 5. The pressing carbon nanotube film has good tensile strength, and can, advantageously, be formed into most any desired shape of the conductive layer. A thickness of the pressing carbon nanotube film is ranged from 0.5 nanometers to 1 millimeter.

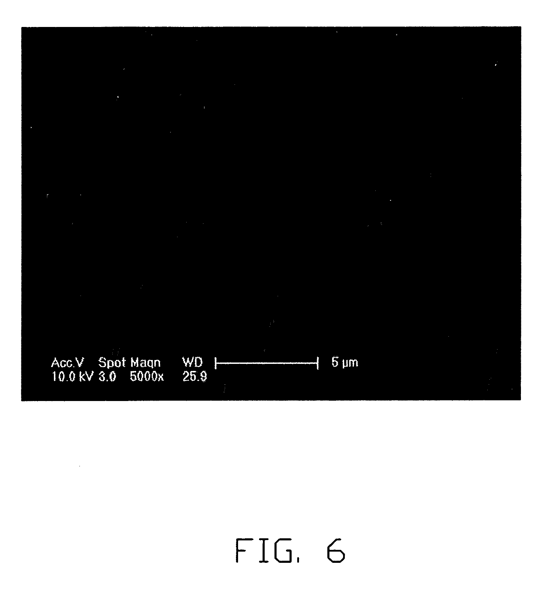

Referring to FIG. 6, the drawing carbon nanotube film includes a plurality of successive carbon nanotubes joined end to end and are aligned substantially along a same direction. The majority of carbon nanotubes are arraigned along a primary direction; however, the orientation of some of the nanotubes may vary. The drawing carbon nanotube film comprises a plurality of successively oriented carbon nanotube segments joined end-to-end by van der Waals attractive force therebetween. Each carbon nanotube segment includes a plurality of carbon nanotubes parallel to each other, and combined by van der Waals attractive force therebetween. The carbon nanotube segments can vary in width, thickness, uniformity and shape. The carbon nanotubes in the carbon nanotube segment are also oriented along a preferred orientation.

The drawing carbon nanotube film can be drawn from a carbon nanotube array, the carbon nanotubes are combined by van der Waals attractive force. The drawing carbon nanotube film is adhesive because the carbon nanotubes in the carbon nanotube array have relatively large specific areas. A thickness of the drawing carbon nanotube film is approximately ranged from 0.5 nanometers to 100 microns. When the carbon nanotube structure includes at least two layers of drawing carbon nanotube films, the layers of drawing carbon nanotube film stacked with each other. The angle between the aligned directions of the carbon nanotubes in the two adjacent carbon nanotube films approximately ranges from above or equal to 0 ° to less than or equal to 90 °.

In the present embodiment, the first conductive layer 122 and the second conductive layer 142 both include a carbon nanotube structure. The carbon nanotube structure includes, at a minimum, two drawing carbon nanotube films. The carbon nanotubes in the first conductive layer 122 are oriented along a first direction, and the carbon nanotubes in the second conductive layer 142 are oriented along a second, different direction. A thickness of the drawing carbon nanotube film approximately ranges from 0.5 nanometers to 100 micrometers. It is to be understood that some variation can occur in the orientation of the nanotubes in the film as can be seen in FIG. 6.

The touch panel 10 can further include a shielding layer (not shown) located on the lower surface of the second base 140. The material of the shielding layer can be indium tin oxide, antimony tin oxide, carbon nanotube film, and other conductive materials. In the present embodiment, the shielding layer is a carbon nanotube film. The carbon nanotube film includes a plurality of carbon nanotubes 145, and the orientation of the carbon nanotubes 145 therein can be arbitrary or arranged along a same direction. The carbon nanotube film is connected to the ground and plays a role of shielding and, thus, enables the touch panel 10 to operate without interference (e.g., electromagnetic interference).

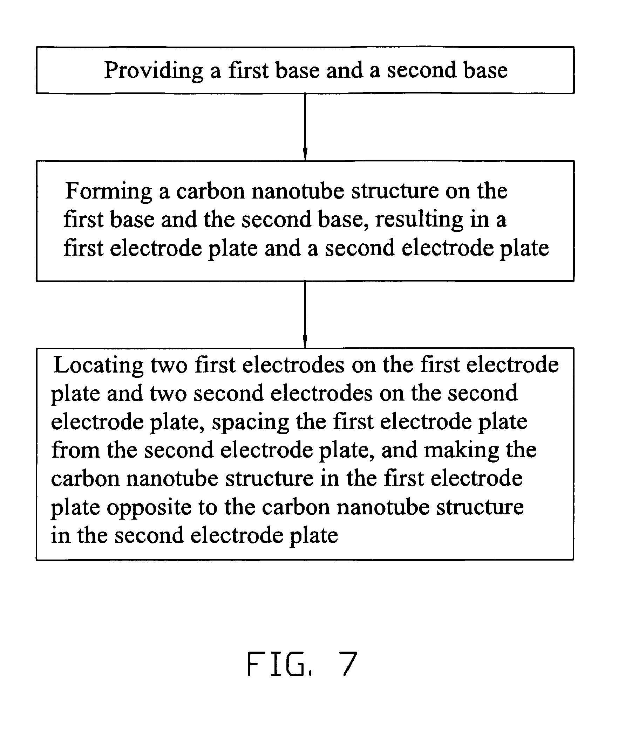

Referring also to FIG. 7, an exemplary method for making the touch panel 10 includes the steps of: (a) providing a first base 120 and a second base 140; (b) forming a carbon nanotube structure on the first base 120 and a second base 140, resulting in a first electrode plate 12 and a second electrode plate 14; and (c) locating two first electrodes 122 on the first electrode plate 12 and two second electrodes 142 on the second electrode plate 14, spacing the first electrode plate 12 from the second electrode plate 14, and making the carbon nanotube structure in the first electrode plate 12 opposite to the carbon nanotube structure in the second electrode plate 14.

In step (a), the first base 120 can be a transparent and flexible film or plate. The second base 140 also can be a transparent plate or film. A material of the second base 140 can be selected from rigid or flexible materials. When the second base 140 is made of a rigid material, and the material of the second base 140 can be selected from a group consisting of glass, quartz and diamond. The second base 140 can play a role of supporting. When the first base 120 and the second base 140 have a flexible planer structure and are made of flexible materials, a thickness of the first base 120 and the second base 140 approximately ranges from 0.01 millimeters to 1 centimeter. A material of the first base 120 and the second base 140 can be selected from a group consisting of polycarbonate (PC), polymethyl methacrylate (PMMA), polyethylene terephthalate, polyether sulfone (PES), cellulose acetate, benzocyclobutene, polyvinyl chloride (PVC) and any other acrylic resins, and any combination thereof. In the present embodiment, the first base 120 and the second base 140 are both a polyester film, e.g., a PET film.

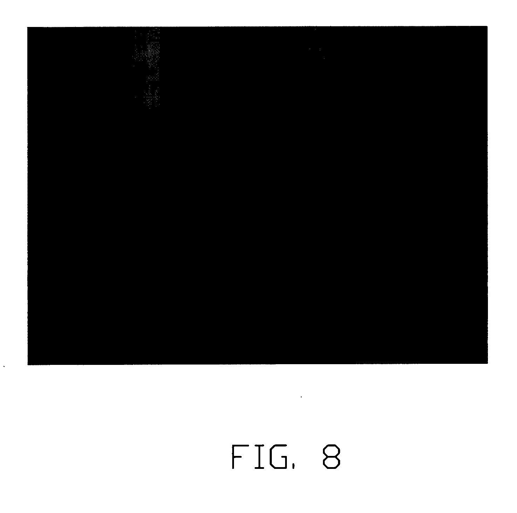

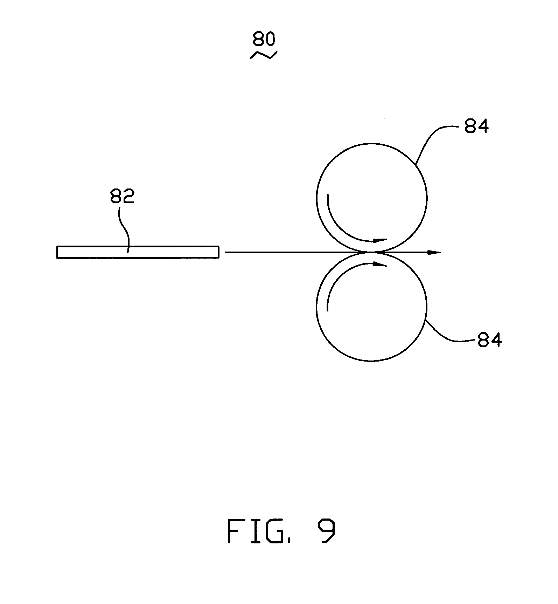

Referring to FIGS. 8 and 9, after forming a carbon nanotube structure on the first base 120 and the second base 140, an additional step of hot-pressing the base 120, 140 with the carbon nanotube structure thereon is further executed. This step can be carried by a hot-press device 80, and specifically includes the substeps of: locating a flexible base 82 coated with a carbon nanotube structure on the hot-press device 80; heating a pressing device 84 of the hot-press device 80; and squeezing of the flexible base 82 by the pressing device 84.

The hot-pressed device 80 includes a pressing device 84 and a heating device (not shown). In the present embodiment, the hot-press device 80 is a hot-press machine, and the pressing device 84 includes two rollers. The heating device is used to heat the pressing device 84. A temperature of the pressing device 84 approximately ranges from 110 °C to 120 °C. The flexible base 82 with a carbon nanotube structure thereon is slowly passed through the pressing device 84. A speed of the flexible base 82 is about from 1 millimeter per minute to 10 meters per minute. In the present embodiment, a certain pressure is applied to the flexible base 82, by the heated roller, to soften it. As such, air between the carbon nanotube structure and the flexible base 82 is pressed out of the flexible base 82, and the carbon nanotube structure firmly adheres on the surface of the flexible base 82.

It is to be noted that when the low melting material is sandwiched between the flexible base 82 and the carbon nanotube structure, in the process of pressing the flexible base 82, the carbon nanotube structure is adhered to the flexible base 82 by the low melting material.

In the present embodiment, the carbon nanotube structure can be formed on the first base 120 and second base 140 respectively by the following steps of: (b1) providing a carbon nanotube structures; (b2) applying the carbon nanotube structure on a surface of the first base 120 and the second base 140 respectively; (b3) locating the first base 120 and the second base 140 with the carbon nanotube structure thereon on the hot-press device 80 having the pressing device 84; (b4) heating the pressing device 84 of the hot-press device 80; and (b5) squeezing of the first base 120 and the second base 140 by the pressing device 84 respectively.

In step (b), the carbon nanotube structure can be a flocculating carbon nanotube film, a pressing carbon nanotube film, or at least one drawing carbon nanotube film.

When the carbon nanotube structure is a flocculating carbon nanotube film, step (b) also can be executed by the following steps of: (b1') providing carbon nanotubes; (b2') flocculating the carbon nanotubes to acquire a carbon nanotube floccule structure, and forming a first conductive layer 122 on the first base 120 and/or a second conductive layer 142 on the second base 140 with the carbon nanotube floccule structure.

Step (b1') can be executed by the following steps of: (b1'1) providing a substantially flat and smooth base; (b1'2) forming a catalyst layer on the base; (b1'3) annealing the base with the catalyst layer in air at a temperature in an approximate range from 700°C to 900°C for about 30 to 90 minutes; (b1'4) heating the base with the catalyst layer to a temperature in the approximate range from 500°C to 740°C in a furnace with a protective gas therein; (b1'5) supplying a carbon source gas to the furnace for about 5 to 30 minutes and growing the array of carbon nanotubes on the base; and (b1'6) separating the array of carbon nanotubes from the base to get the plurality of carbon nanotubes.

In step (b1'1), the base can be a P-type silicon wafer, an N-type silicon wafer, or a silicon wafer with a film of silicon dioxide thereon. In this embodiment, a 4-inch P-type silicon wafer is used as the base. In step (b1'2), the catalyst can be made of iron (Fe), cobalt (Co), nickel (Ni), or any alloy thereof. In step (b1'4), the protective gas can be made up of at least one of nitrogen (N₂), ammonia (NH₃), and a noble gas. In step (b1'5), the carbon source gas can be a hydrocarbon gas, such as ethylene (C₂H₄), methane (CH₄), acetylene (C₂H₂), ethane (C₂H₆), or any combination thereof.

The array of carbon nanotubes can be a super-aligned array of carbon nanotubes, and have a height of about 50 microns to 5 millimeters. The array of carbon nanotubes includes a plurality of carbon nanotubes parallel to each other and approximately perpendicular to the base.

The super-aligned array of carbon nanotubes formed under the above conditions is essentially free of impurities such as carbonaceous or residual catalyst particles. The carbon nanotubes in the super-aligned array are closely packed together by the van der Waals attractive force.

In step (b2'), the flocculating process includes the substeps of: (b2'1) adding carbon nanotubes to a solvent to get a carbon nanotube floccule structure; (b2'2) removing the solvent to obtain a carbon nanotube structure; (b2'3) applying the carbon nanotube structure to the first base 120 and/or the second base 140 respectively.

In step (b2'1) of the present embodiment, the solvent is selected from the group consisting of water and volatile organic solvent. After adding the carbon nanotubes to the solvent, a process of flocculating is executed to get the carbon nanotube floccule structure. The process of flocculating is selected from the group of processes consisting of ultrasonic dispersion and high-strength agitating/vibrating. In this embodiment, ultrasonic dispersion is used to flocculate the solvent containing the carbon nanotubes for about 10~30 minutes. Due to the carbon nanotubes in the solvent having a large specific surface area and the carbon nanotubes having a large van der Waals attractive force, the flocculated carbon nanotubes form an entangled structure (i.e., carbon nanotube floccule structure).

In step (b2'2), the removing the solvent can be done by the process of pumping filtration which includes the substeps of: filtering the solvent containing the carbon nanotube floccule structure through a microporous membrane and into an air-pumping funnel; and air-pumping and drying the carbon nanotube floccule structure captured on the microporous membrane to obtain the carbon nanotube structure.

The microporous membrane has a smooth surface. And the diameters of micropores in the membrane are about 0.22 microns. The pumping filtration can exert air pressure on the carbon nanotube floccule structure, thus, forming a uniform carbon nanotube structure. Moreover, due to the microporous membrane having a smooth surface, the carbon nanotube structure can be easily separated from the membrane.

In step (b3'), the carbon nanotube structure is cut into a predetermined shape, and is attached to the first base 120 and/or the second base 140.

Step (b2') can be also accomplished by the substeps of: (b2'1') adding the carbon nanotubes to a solvent to obtain a carbon nanotube floccule structure; (b2'2') separating the carbon nanotube floccule structure from the solvent, and (b2'3') shaping the separated carbon nanotube floccule structure on the first base 120 and/or the second base 140, to form a carbon nanotube structure on the first base 120 and/or the second base 140.

Step (b2'2') includes the substeps of: pouring the solvent containing the carbon nanotube floccule structure into a funnel having a filter; and drying the carbon nanotube floccule structure on the filter to obtain the carbon nanotube floccule structure free of solvent.

In step (b2'2'), a time of drying can be selected according to practical needs. The carbon nanotube floccule structure on the filter is bundled together, so as to form an irregular carbon nanotube flocculate structure.

In step (b2'3'), the process of shaping the separated carbon nanotube floccule structure into the carbon nanotube structure includes the substeps of: putting the carbon nanotube floccule structure on the first base 120 and/or the second base 140, and working the carbon nanotube floccule structure into a predetermined shape; pressing the worked carbon nanotube floccule structure with pressure to yield a desirable shape; and drying the spread carbon nanotube floccule structure to remove the residual solvent to form a carbon nanotube layer on the first base 120 and/or the second base 140.

In step (b2'3'), the separated carbon nanotube floccule structure also can be put on another base. Then the raw carbon nanotube floccule structure is pressed with a certain pressure to yield a desirable shape and is cut into sizes of the first base 120 and/or the second base 140, and then is adhered on the first base120 and/or the second base 140 to form a carbon nanotube structure thereon.

It is to be understood that the size of the spread carbon nanotube floccule structure is used to control a thickness and a surface density of the carbon nanotube structure and can be adjusted as needed. As such, the larger the area of a given amount of the carbon nanotube floccule structure is spread over, the less the thickness and the density of the carbon nanotube structure.

When the carbon nanotube structure is a pressing carbon nanotube film, step (b) includes the following steps of: (b1'') providing at least one array of carbon nanotubes; (b2") pressing the array of carbon nanotubes with a pressing device to form a carbon nanotube structure on the first and second bases 120, 140, thereby forming a first conductive layer 122 and a second conductive layer 142 on the first and second bases 120, 140 respectively.

In step (b1''), the method for forming the at least one array of carbon nanotubes is similar to that for forming an array of carbon nanotubes in step (b1').

In step (b2"), since the carbon nanotube array is adherent in nature, the first base 120 and the second base 140 can be firmly adhered to the array of carbon nanotubes. In the present embodiment, the first conductive layer 122 and the second conductive layer 142 can be formed by either of two methods. The first method includes the steps of: (b2"1) providing a pressing device, and pressing the array of carbon nanotubes to form a carbon nanotube film; (b2"2) cutting the carbon nanotube film into sizes of the first base and the second base; and (b2"3) adhering the cut carbon nanotube films on the first base and the second base respectively to form the first conductive layer 122 and the second conductive layer 142. The second method includes the steps of: (b2"1') placing first surfaces of the first base 120 and the second base 140 on the array of carbon nanotubes; (b2"2') providing a pressing device, and pressing opposite second surfaces of the first base 120 and the second base 140 so that the first base 120 and the second base 140 are pressed onto the array of carbon nanotubes to form a carbon nanotube film on each of the first base 120 and the second base 140; and (b2"3') cutting away excess carbon nanotube film to form the first conductive layer 122 on the first base 120 and the second conductive layer 142 on the second base 140.

In step (b2"), a certain pressure can be applied to the array of carbon nanotubes by the pressing device. In the process of pressing, the carbon nanotubes in the array of carbon nanotubes form each of the carbon nanotube films under pressure. The carbon nanotubes in each carbon nanotube film are nearly all parallel to a surface of the carbon nanotube film. In step (b2''1), in the process of pressing, the carbon nanotubes slant, thereby forming a carbon nanotube film having a free-standing structure on the base on which the carbon nanotube array is initially formed. The carbon nanotubes in the free-standing structure are nearly all parallel to a major surface of the carbon nanotube film, and are arranged isotropically, or arranged along a same direction or arranged along different directions. In step (b2"2'), the carbon nanotube film, under a certain pressure, separates from the growing base on which the carbon nanotube array is initially formed, and is adhered on the first base and the second base respectively because of the adhesive properties of the carbon nanotubes.

In the present embodiment, the pressing device can be a pressure head. The pressure head has a smooth surface. It is to be understood that the shape of the pressure head and the pressing direction can, opportunely, determine the direction of the carbon nanotubes arranged in each carbon nanotube film. Specifically, when a planar pressure head is used to press the array of carbon nanotubes along a direction perpendicular to the applicable base, a carbon nanotube film having a plurality of carbon nanotubes isotropically arranged can be obtained. Referring to FIG. 4, when a roller-shaped pressure head is used to travel across and press the array of carbon nanotubes along a predetermined single direction, a carbon nanotube film having a plurality of carbon nanotubes aligned along a general direction is obtained. Referring to FIG. 5, when a roller-shaped pressure head is used to travel across and press the array of carbon nanotubes along different directions, a carbon nanotube film having a plurality of carbon nanotubes aligned along corresponding different directions is obtained.

In the process of pressing, the carbon nanotubes will bend/fall over, thereby forming a carbon nanotube film having a free-standing structure with slanted carbon nanotubes. The carbon nanotubes in the free-standing structure are nearly all parallel to a surface of the carbon nanotube film, and are isotropically arranged, arranged along a same direction, or arranged along different directions.

When the carbon nanotube structure is a drawing carbon nanotube film, step (b) includes the following steps of: (b1''') providing an array of carbon nanotubes; (b2''') pulling out a drawing carbon nanotube film from the array of carbon nanotubes, by using a tool (e.g., adhesive tape, pliers, tweezers, or another tool allowing multiple carbon nanotubes to be gripped and pulled simultaneously); (b3"') applying at least one drawing carbon nanotube film on the first and second bases 120, 140 respectively.

In step (b1'''), the method for forming the array of carbon nanotubes is similar to that for forming an array of carbon nanotubes in step (b1'). The array of carbon nanotubes is a super-aligned array of carbon nanotubes.

In step (b2"'), the drawing carbon nanotube film can be formed by the substeps of: (b2'''1) selecting a one or more carbon nanotubes having a predetermined width from the array of carbon nanotubes; and (b2"'2) pulling the carbon nanotubes to form nanotube segments at an even/uniform speed to achieve a uniform drawing carbon nanotube film.

In step (b2'''1), the carbon nanotube segment includes a plurality of carbon nanotubes parallel to each other. The carbon nanotube segments can be selected by using an adhesive tape as the tool to contact the array of carbon nanotubes. In step (b2"'2), the pulling direction is substantially perpendicular to the growing direction of the super-aligned array of carbon nanotubes. It is to be understood that some variation can occur in the orientation of the nanotubes in the film as can be seen in FIG 6.

More specifically, during the pulling process, as the initial carbon nanotube segments are drawn out, other carbon nanotube segments are also drawn out end to end due to van der Waals attractive force between ends of adjacent carbon nanotube segments.
This process of drawing ensures a substantially continuous and uniform drawing carbon nanotube film can be formed.

The drawing carbon nanotube film includes a plurality of carbon nanotube segments. The carbon nanotubes in the drawing carbon nanotube film are all substantially parallel to the pulling/drawing direction of the carbon nanotube film, and the drawing carbon nanotube film produced in such manner can be selectively formed having a predetermined width. The drawing carbon nanotube film formed by the pulling/drawing method has superior uniformity of thickness and conductivity over a disordered carbon nanotube film. Further, the pulling/drawing method is simple, fast, and suitable for industrial applications.

The width of the drawing carbon nanotube film depends on a size of the carbon nanotube array. The length of the drawing carbon nanotube film can be arbitrarily set, as desired. In one useful embodiment, when the base is a 4-inch type wafer as in the present embodiment, the width of the drawing carbon nanotube film approximately ranges from 0.5 nanometers to 10 centimeters, and the thickness thereof approximately ranges from 0.5 nanometers to 100 micrometers. The carbon nanotubes 145 in the drawing carbon nanotube film can be selected from a group consisting of single-walled carbon nanotubes, double-walled carbon nanotubes, and multi-layer carbon nanotubes. Diameters of the single-walled carbon nanotubes approximately range from 0.5 to 50 nanometers. Diameters of the double-walled carbon nanotubes approximately range from 1 to 50 nanometers. Diameters of the multi-walled carbon nanotubes approximately range from 1.5 to 50 nanometers.

In step (b3'''), it is noted that because the carbon nanotubes in the super-aligned carbon nanotube array have a high purity and a high specific surface area, the carbon nanotube film is adherent in nature. As such, the carbon nanotube film can be adhered directly to a surface of the first base 120 or the second base 140, and/or another carbon nanotube film. In the alternative, other bonding means can be applied. In the present embodiment, the carbon nanotube structure only includes a single drawing carbon nanotube film. Each drawing carbon nanotube film comprises a plurality of carbon nanotube segments; which are in turn comprised of a plurality of carbon nanotubes arranged along a same direction. The direction is generally the pulling direction. As such, at least two drawing carbon nanotube films are arranged and stacked with the angle α between the orientation of the nanotubes, wherein 0□α□90°. By applying an angle to the alignment direction, the strength of the stacked layers as a hole is improved.

The at least one carbon nanotube film, once adhered to a surface of the first base 120 or the second base 140 can be treated with an organic solvent. The at least one carbon nanotube film can be treated by dropping the organic solvent from a dropper to soak the entire surface of the carbon nanotube film. The organic solvent is volatilizable and can, suitably, be selected from the group consisting of ethanol, methanol, acetone, dichloroethane, chloroform, and combinations thereof. In the present embodiment, the organic solvent is ethanol. After being soaked by the organic solvent, microscopically, carbon nanotube strings will be formed by adjacent carbon nanotubes in the carbon nanotube film, that are able to do so, bundling together, due to the surface tension of the organic solvent. In one aspect, part of the carbon nanotubes in the untreated at least one carbon nanotube film that are not adhered on the base will adhere on the base 120,140 after the organic solvent treatment due to the surface tension of the organic solvent. Then the contacting area of the at least one carbon nanotube film with the base will increase, and thus, the at least one carbon nanotube film can firmly adhere to the surface of the first base 120,140. In another aspect, due to the decrease of the specific surface area via the bundling, the mechanical strength and toughness of the at least one carbon nanotube film are increased and the coefficient of friction of the at least one carbon nanotube films is reduced. Macroscopically, the film will be an approximately uniform carbon nanotube film.

In step (c), the first and second electrodes 124, 144 are strip-shaped, and formed by any one or more of silver, copper and the like metal, alloy, carbon nanotubes, or conductive silver paste. In the present embodiment, the first and second electrodes 124, 144 are made of conductive silver paste. The method for making the first electrodes 124 and the second electrodes 144 includes the following steps of: (c1) coating a conductive silver paste on opposite ends of the first and second electrode plates 12, 14 by means of screen printing or spraying; (c2) baking the first and second electrode plate 12, 14 in an oven for 10-60 minutes at a temperature in an approximate range from 100°C to 120°C to solidify the conductive silver paste.

In step (c1), the conductive silver paste can be coated on the opposite ends of the first and second conductive layer 122, 142 or on opposite ends of the base 120,140. In step (c), the first electrodes 124 are electrically connected to the first conductive layer 122, and the second electrodes 144 are electrically connected to the second conductive layer 142. The arranged directions of the two electrodes of the first electrode plate intersect with that of the two electrodes of the second electrode plate.

The method for making touch panel 10 can further includes forming an insulative layer between the first electrode plate 12 and the second electrode plate 14. The insulative layer is made of, for example, insulative resin or any other insulative transparent material. The insulative layer can be formed by coating a layer of insulative adherent agent on the edges of the first electrode plate or the base.

The method for making touch panel 10 can further includes forming a transparent protective film 126 on the upper surface of the first base 120. A material of the transparent protective film 126 can be selected from a group consisting of silicon nitride, silicon dioxide, benzocyclobutene, polyester film, and polyethylene terephthalate. In the present embodiment, the transparent protective film is adhesive polyethylene terephthalate film. The adhesive polyethylene terephthalate film can be adhered to the upper surface of the first base 120, thereby serving as the transparent protective film 126.

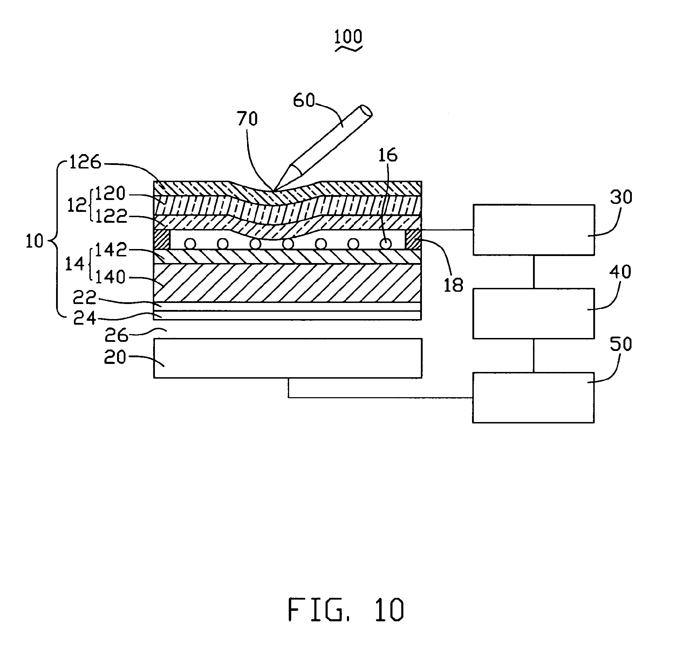

Referring to FIG. 10, a display device 100 includes the touch panel 10, a display element 20, a first controller 30, a central processing unit (CPU) 40, and a second controller 50. The touch panel 10 is opposite and adjacent to the display element 20, and is connected to the first controller 30 by an external circuit. The touch panel 10 can be spaced from the display element 20 or installed directly on the display element 20. In the illustrated embodiment, the touch panel 10 is spaced from the display element 20, with a gap 26. The first controller 30, the CPU 40, and the second controller 50 are electrically connected. The CPU 40 is connected to the second controller 50 to control the display element 20.

The display element 20 can be, e.g., a liquid crystal display, a field emission display, a plasma display, an electroluminescent display, a vacuum fluorescent display, a cathode ray tube, or another display device.

When a shielding layer 22 is located on the lower surface of the second base 140, a passivation layer 24 is located on a surface of the shielding layer, on the side away from the second base 140. The material of the passivation layer 24 can, for example, be silicon nitride or silicon dioxide. The passivation layer 24 can be spaced from the display element 20 a certain distance or can be installed on the display element 20. The passivation layer 24 can protect the shielding layer 22 from chemical or mechanical damage.

In operation, 5V are applied to each of the two first-electrodes 124 of the first electrode plate 12 and to each of the two second-electrodes 144 of the second electrode plate 14. A user operates the display by pressing the first electrode plate 12 of the touch panel 10 with a finger, a pen/stylus 60, or the like while visually observing the display element 20 through the touch panel 10. This pressing causes a deformation 70 of the first electrode plate 12. The deformation 70 of the first electrode plate 12 causes a connection between the first conductive layer 122 and the second conduction layer 142 of the second electrode plate 14. Changes in voltages in the first direction of the first conductive layer 142 and the second direction of the second conductive layer 142 can be detected by the first controller 30. Then the first controller 30 transforms the changes in voltages into coordinates of the pressing point, and sends the coordinates of the pressing point to the CPU 40. The CPU 40 then sends out commands according to the coordinates of the pressing point and further controls the display of the display element 20.

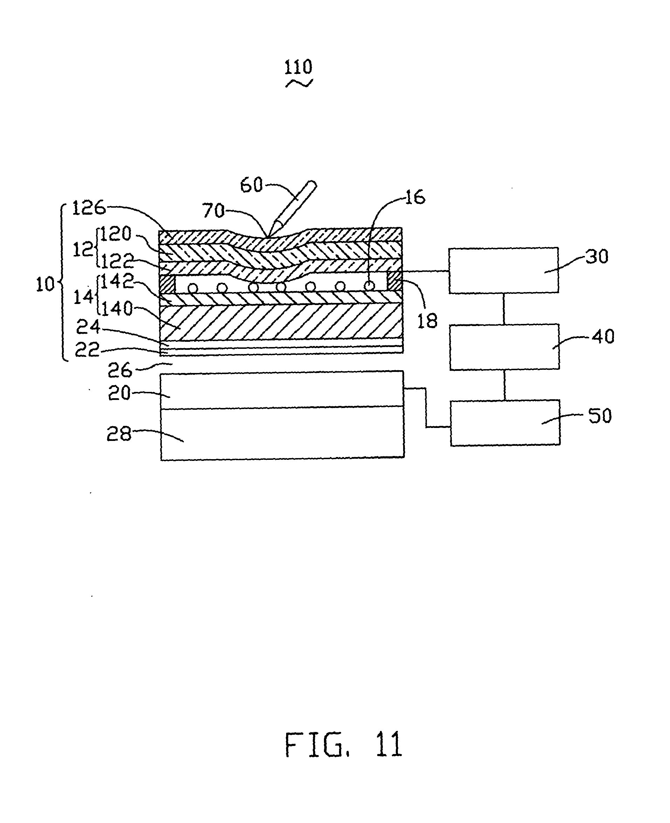

Referring to FIG. 11, a touch control device 110 using the display device 100, in accordance with a present embodiment is provided. The touch control device 110 includes the touch panel 10, a display element 20, and a windshield 30 like that found on an automobile. The display element 20 is disposed on an inner surface of the windshield 30. The display element 20 includes a first surface and a second surface. The first surface of the display element 20 is a displaying surface. The touch panel 10 can be directly disposed on the first surface of the display element 20, or can be opposite to and spaced from the first surface of the display element 20 by some spacers. The second surface of the display element 20 faces the inner surface of the windshield 30.

In one suitable embodiment, the display element 20 can be adhered to the inner surface of the windshield 30 by using a binder or fixed on the inner surface of the windshield 30 by screws. To avoid interfering with the user's field of view, the display element 20 can be set on a corner or a top of the windshield 30. It is to be understood that, the display element 20 and the touch panel 10 can be driven by an outer power supplied by a car's power. The display element 20 and the touch panel 10 can be connected by conducting lines that are disposed on a side of the windshield 30.

The windshield 30 can be a transparent base made of glass. The display element 20 can be an e-paper (i.e., a microencapsulated electrophoretic display), a flexible liquid crystal display, a flexible organic light emitting display (OLED), or any other flexible display. The display element 20 can also be a conventional display such as liquid crystal display, field emission display, plasma display, electroluminescent display, vacuum fluorescent display, cathode ray tube, or another display device. In the present embodiment, the display element 20 is a transparent electroluminescent display known in the art. The transparent electroluminescent display includes a transparent base serving a through view behind the display.

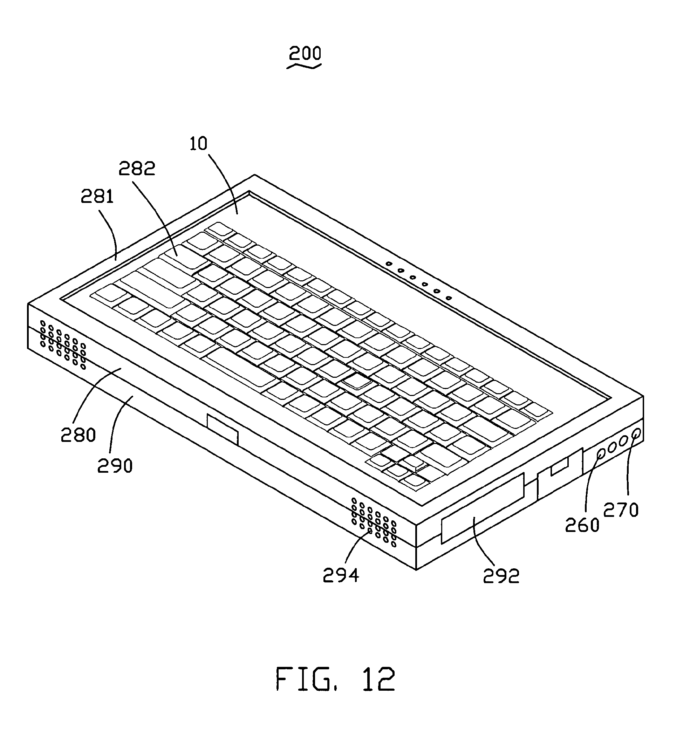

Referring to FIG. 12, a portable computer 200 using the display device 100, in accordance with a present embodiment is provided. The portable computer 200 includes a display screen 280, a host computer 290 and the touch panel 10. The display screen 280 includes a displaying surface 281. The host computer 290 is located on a surface of the display screen 280 departing from the displaying surface 281. The touch panel 10 is located on the displaying surface 281. The display screen 280 can be selected from a group consisting of liquid crystal display screen, field emission display screen and plasma display screen, electroluminescent display screen and vacuum fluorescent display screen. The display screen 280 is used to display output data and images of the host computer 290. In the present embodiment, the display screen 280 is a liquid crystal display screen. Connection among the display screen 280, the host computer 290, and the touch panel 10 are be realized by internal input port (not label) and output port (not label). In the present embodiment, the touch panel 10 is electrically connected to the host computer 290, and the display screen 280 is electrically connected to the host computer 290 by the internal input ports and output ports. It can be understood that at least one of the external input port 260 and at least one output port 270 can be located at one side of the host computer 290 and used to input signals to the host computer 290.

The host computer 290 includes a mainboard, a central processing unit (CPU), memory, and hard drive components, and so on. The central processing unit (CPU), and memory are located on the mainboard. The hard drive components are electrically connected to the mainboard by a cable. Further, a speaker 294 and disk drives 292 are located on a side of the host computer 290.

The touch panel 10 plays a role of inputing signals. The touch panel 10 can be adhered on the displaying surface 281 by an adhesive. It can be understood that a plurality of touch panels 10 can be located on the displaying surface 281 when an area of the touch panel 10 is smaller than that of the displaying surface 281. Further, a keyboard 282 can be shown on the displaying surface 281 considering of diversifying the input of information.

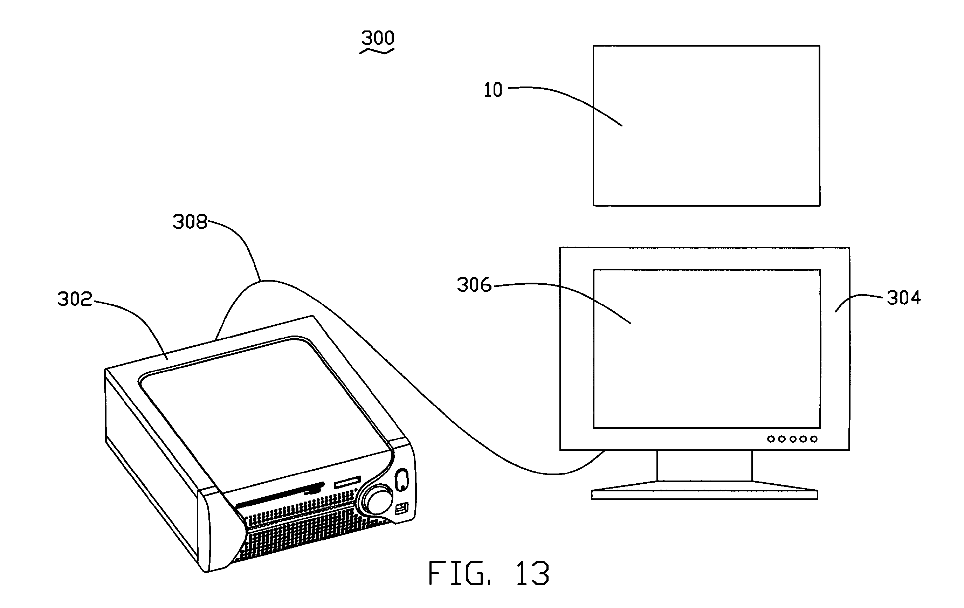

Referring to FIG. 13, a desktop computer 300 using the display device, in accordance with a present embodiment is provided. The desktop computer 300 includes a host computer 302, a display 304, and the touch panel 10. The display 304 is connected to the host computer 302 via a date wire 308. The display 304 includes a display screen 306. The touch panel 10 is located on a surface of the display screen 306.

The host computer 302 includes a mainboard, a central processing unit (CPU), memory, and hard drive components, and so on. The central processing unit (CPU), and memory are located on the mainboard. The hard drive components are electrically connected to the mainboard by a cable. At least two of the external input/output port (not shown) can be located at one side of the host computer 290 and used to connect with the display 304 and the touch panel 10 and other device thereto. Further, a speaker (not labeled) and disk drives (not labeled) are located on a side of the host computer 302.

The display 304 can be selected from a group consisting of liquid crystal display, field emission display and plasma display, electroluminescent display and vacuum fluorescent display. The display 304 is used to display output data and images of the host computer 302. In the present embodiment, the display 304 is a liquid crystal display screen.

The touch panel 10 plays a role of inputing signals. The touch panel 10 can be spaced from the display 304 or installed directly on the display 304. The touch panel 10 can be adhered on the display screen 306 of the display 304 by an adhesive. In the present embodiment, the touch panel 10 and the display 304 use a same base. It can be understood that a plurality of touch panels 10 can be located on the displaying surface 281 when an area of the touch panel 10 is smaller than that of the displaying surface 281. Further, a keyboard 282 can be shown on the displaying surface 281 considering of diversifying the input of information.

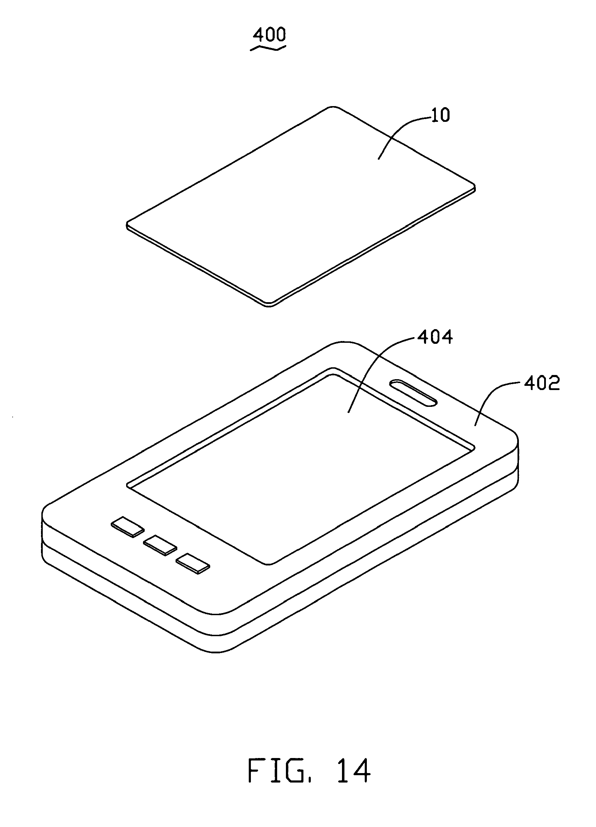

Referring to FIG. 14, a personal digital assistant 400 using the display device, in accordance with a present embodiment is provided. The personal digital assistant 400 includes a body 402 and the touch panel 10. The body 402 includes a display screen 404. The touch panel 10 is located on a surface of the display screen 404.

The body 402 further includes a shell (not shown), a central processing unit (CPU) (not shown), a storage unit (not shown) and a control unit (not shown). The central processing unit, the storage unit, the control unit, and the display screen are all located in the shell. The storage unit, the central processing unit and the control unit can locate on a integrated circuit board (not shown). The storage unit and the control unit are electrically connected to the central processing unit by a conductive wire on the integrated circuit board. The display screen 404 and the touch panel 10 are connected to the control unit. The control unit can includes a touch panel control unit, a display screen control unit and other functional control units to control the touch panel 10, the display screen 404 and other functional device, such as thin notebook, dictionary, and communications. The storage unit can further include a read-only memory, a random access memory, and a programmable memory.

The display screen 404 can be selected from a group consisting of liquid crystal display screen, field emission display screen and plasma display screen, electroluminescent display screen and vacuum fluorescent display screen. In the present embodiment, the display screen 404 is a liquid crystal display screen.

The touch panel 10 plays a role of inputing signals. The touch panel 10 can be spaced from the display screen 404 or installed directly on the display screen 404. The touch panel 10 can be adhered on the display screen 404 by an adhesive. In the present embodiment, the touch panel 10 and the display screen 404 use a same base. Further, a keyboard (not shown) can be shown on the display screen 404 considering of diversifying the input of information.

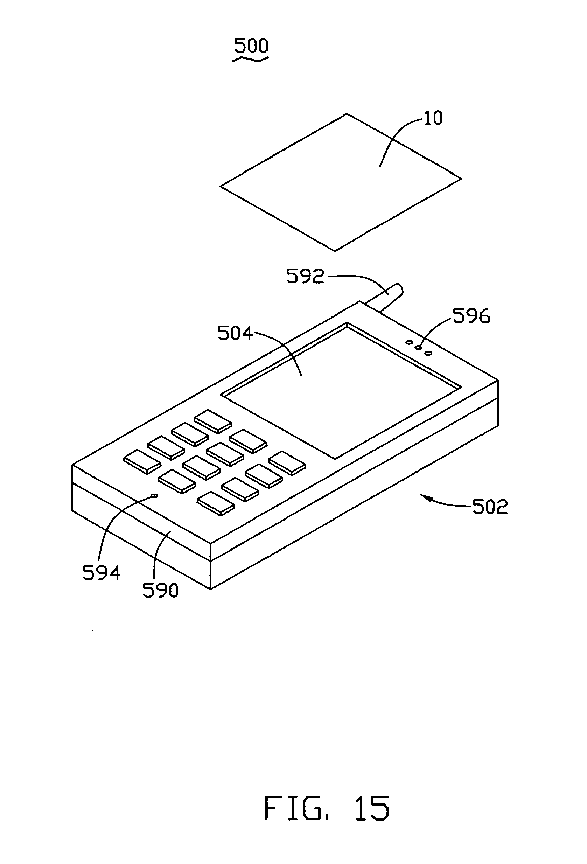

Referring to FIG. 15, a mobile phone 500 using the display device 100, in accordance with a present embodiment is provided. The mobile phone 500 includes a body 502 and a touch panel 10. The body 502 includes a display screen 504. The touch panel 10 is located on a surface of the display screen 504 departing from the body 502.

The body 502 further includes a shell 590, a communication system, a central processing unit (CPU) (not shown), a storage unit (not shown) and a control unit (not shown). The communication system includes a line 592, a microphone 594 and a speaker 596. The central processing unit, the storage unit, the control unit, and the microphone 594, the speaker 596 and the display screen 504 are all located in the shell 590. The line 592 can be located in the shell 590 or extending out from the shell 590. The storage unit, the central processing unit and the control unit can locate on a integrated circuit board (not shown). The storage unit and the control unit are electrically connected to the central processing unit by a conductive wire on the integrated circuit board. The line 592, the microphone 594 and the speaker 596, the display screen 404 and the touch panel 10 are connected to the control unit. The control unit can includes a touch panel control unit, a display screen control unit, a communication control unit and other functional control units to control the touch panel 10, the display screen 404, the line 592, the microphone 594, the speaker 596, and other functional device. The storage unit can further include a read-only memory, and a random access memory.

The display screen 504 can be selected from a group consisting of liquid crystal display screen, field emission display screen and plasma display screen, electroluminescent display screen and vacuum fluorescent display screen. In the present embodiment, the display screen 404 is a liquid crystal display screen.

The touch panel 10 plays a role of inputing signals. The touch panel 10 can be spaced from the display screen 504 or installed directly on the display screen 504. The touch panel 10 can be adhered on the display screen 504 by an adhesive. In the present embodiment, the touch panel 10 and the display screen 504 use a same base. Further, a keyboard (not shown) can be shown on the display screen 504 considering of diversifying the input of information.

The properties of the carbon nanotubes provide superior toughness, high mechanical strength, and uniform conductivity to the carbon nanotube film. Thus, the touch panel and the display device using the same adopting the carbon nanotube film are durable. Furthermore, when a flexible base is used in the touch panel, a flexible touch panel is obtained and thus this can be applied to a flexible display element. Further, since the carbon nanotubes have excellent electricity conductive property, the carbon nanotube layer, formed by a plurality of carbon nanotubes oriented along a same direction and uniformly distributed therein, has a uniform resistance distribution and thus the touch panel and the display device using the same adopting the carbon nanotube structure have an improved sensitivity and accuracy. Furthermore, the pulling method for fabricating the carbon nanotube film is simple, and the adhesive carbon nanotube film can be located directly on the base. As such, the method for fabricating the carbon nanotube film is suitable for the mass production of touch panels and display device using the same and reduces the cost thereof. Furthermore, the carbon nanotube film has a high transparency, thereby promoting improved brightness of the touch panel and the display devices using the same. Further, the flocculating method for fabricating the carbon nanotube structure is simple. As such, the method for fabricating the carbon nanotube structure is suitable for the mass production of touch panels and display device and reduces the cost thereof. Furthermore, the carbon nanotube structure has a microporous structure containing a plurality of micropores, whose diameters are less than 10 micrometers. Thus, the carbon nanotube structure has high transparency, thereby promoting improved brightness of the touch panel and the display device. Furthermore, the method for making the carbon nanotube films via pressing the carbon nanotube array using a pressing device is also simple, without the need for a vacuum or heating process. Accordingly, the touch panel and the display device can be manufactured inexpensively. Finally, since the carbon nanotubes has superior toughness and high mechanical strength, so the electrodes made of carbon nanotubes has superior toughness and high mechanical strength. Therefore it is conducive to improve the durable of the touch panel and display device adopting the same.

Finally, it is to be understood that the above-described embodiments are intended to illustrate rather than limit the invention. Variations may be made to the embodiments without departing from the spirit of the invention as claimed. The above-described embodiments illustrate the scope of the invention but do not restrict the scope of the invention.

It is also to be understood that the above description and the claims drawn to a method may include some indication in reference to certain steps. However, the indication used is only to be viewed for identification purposes and not as a suggestion as to an order for the steps.

## Claims

1. A touch panel comprising:
a first electrode plate comprising a first base and a first conductive layer located on a surface of the first base; and
a second electrode plate separated from the first electrode plate, and comprising a second base and a second conductive layer located on a surface of the second base, the second conductive layer being opposite to the first conductive layer;
wherein at least one of the first conductive layer and the second conductive layer comprises a carbon nanotube structure.

2. The touch panel as claimed in claim 1, wherein the carbon nanotube structure comprises a plurality of disordered carbon nanotubes distributed uniformly therein, and the disordered carbon nanotubes are entangled with each other or parallel to a surface of the carbon nanotube structure.

3. The touch panel as claimed in claim 1, wherein the carbon nanotube structure comprises a plurality of ordered carbon nanotubes distributed uniformly therein, and the ordered carbon nanotubes are primarily oriented along a same direction or along several directions.

4. The touch panel as claimed in claim 3, wherein the carbon nanotube structure comprises at least one carbon nanotube film, the carbon nanotube film is formed by drawn from an array of carbon nanotubes, and the carbon nanotube film comprises a plurality of successive carbon nanotubes joined end to end by van der Walls attractive force therebetween and the carbon nanotubes therein are primarily aligned along a same direction.

5. The touch panel as claimed in claim 4, wherein the carbon nanotube structure comprises at least two carbon nanotube films stacked with each other, and an angle between the aligned directions of the carbon nanotubes in the two adjacent carbon nanotube films approximately ranges from above or equal to 0 ° to less than or equal to 90 °.

6. The touch panel as claimed in claim 4, wherein a thickness of the carbon nanotube film approximately ranges from 0.5 nanometers to 100 micrometers.

7. The touch panel as claimed in any one of claims 1 to 6, wherein the first electrode plate further comprises two first-electrodes located separately at opposite ends of the first conductive layer, each of the two first-electrodes is oriented along a second direction and electrically connected to the first conductive layer; the second electrode plate further comprises two second-electrodes located separately at opposite ends of the second conductive layer thereof, and each of the two second-electrodes is oriented along a first direction and electrically connected to the second conductive layer; and the second direction is perpendicular to the first direction.

8. The touch panel as claimed in any one of claim 1, and claims 3 to 7, wherein the carbon nanotubes in the first conductive layer are oriented along the first direction, and the carbon nanotubes in the second conductive layer are oriented along the second direction.

9. The touch panel as claimed in any one of claims 7 to 8 , wherein a material of the first electrodes and the second electrodes is selected from a group consisting of metal, alloy, conductive polymer, carbon nanotubes and any combination thereof.

10. The touch panel as claimed in any one of claims 1 to 9, wherein a material of the first base and the second base is selected from a group consisting of polycarbonate, polymethyl methacrylate, polyethylene terephthalate, polyether sulfone, cellulose acetate, benzocyclobutene, polyvinyl chloride and any other acrylic resins, and combination thereof.

11. The touch panel as claimed in any one of claims 1 to 10, further comprising an insulative layer located between the first and second electrode plates, and the insulative layer insulates the first electrode plate from the second electrode plate.

12. A method for making a touch panel, the method comprising the following steps of:
(a) providing a first base and a second base;
(b) forming a carbon nanotube structure on the first base and the second base, resulting in a first electrode plate and a second electrode plate; and
(c) locating two first electrodes on the first electrode plate and two second electrodes on the second electrode plate, spacing the first electrode plate from the second electrode plate, and making the carbon nanotube structure in the first electrode plate opposite to the carbon nanotube structure in the second electrode plate.

13. The method as claimed in claim 12, wherein in step (b), after forming a carbon nanotube structure on the first base and the second base, a step of hot-pressing the base with the carbon nanotube structure thereon is further executed.

14. A display device comprising:
a touch panel comprising:
a first electrode plate comprising a first base and a first conductive layer located on a surface of the first base; and
a second electrode plate separated from the first electrode plate, and comprising a second base and a second conductive layer located on a surface of the second base, and the first conductive layer is opposite to the second conductive layer;
wherein at least one of the first conductive layer and the second conductive layer comprises a carbon nanotube structure; and a display element adjacent to the touch panel.

15. The display device as claimed in claim 14, wherein the touch panel is spaced from the display element with a distance or the touch panel is located on the display element.

16. The display device as claimed in claim 14, wherein the display element is selected from one display device of personal digital assistant, desktop computer, portable computer, mobile phone and touch control device.
